# EUROPÄISCHE PATENTSCHRIFT

(11) **EP 0 820 733 B1**
(45) Veröffentlichungstag und Bekanntmachung des Hinweises auf die Patenterteilung: **10.12.2003**
(21) Anmeldenummer: 97112551.3
(22) Anmeldetag: 22.07.1997
(51) Int. Cl.: A61C 1/00, A61G 15/14, A61C 19/00

(54) **Bedien- und/oder Anzeigevorrichtung für ein zahnärztliches Arbeitsgerät**
Operating and/or indicating device for a dental apparatus
Dispositif de commande et/ou d'affichage pour un appareil dentaire

(30) Priorität: 26.07.1996 DE 29613037 U
(43) Veröffentlichungstag der Anmeldung: 28.01.1998
(73) Patentinhaber: Sirona Dental Systems GmbH, 64625 Bensheim (DE)
(72) Erfinder: Phleps, Tilman, 64653 Lorsch (DE)
(74) Vertreter: Sommer, Peter

(56) Entgegenhaltungen:
- DE-A- 2 365 261
- PATENT ABSTRACTS OF JAPAN vol. 15, no. 306 (C-0856), 6. August 1991 & JP 03 114466 A (MORITA TOKYO SEISAKUSHO KK), 15. Mai 1991
- PATENT ABSTRACTS OF JAPAN vol. 15, no. 306 (C-0856), 6. August 1991 & JP 03 114465 A (MORITA TOKYO SEISAKUSHO KK), 15. Mai 1991

## Beschreibung

Die Erfindung bezieht sich auf eine Bedien- und/oder Anzeigevorrichtung für ein zahnärztliches Arbeitsgerät. Solche Bedien- und/oder Anzeigevorrichtungen sind heute üblicherweise dem Arbeitsgerät fest zugeordnet oder mittels eines Schwenkarmes an diesem schwenkbeweglich in verschiedene Betrachtungspositionen bringbar gehaltert. Die zum Betrachten von Röntgenfilmen erforderlichen Röntgenfilmbetrachter sind entweder als autarke, d. h. selbständige Geräte bekannt oder sie sind an geeigneter Stelle an einem zahnärztlichen Arbeitsgerät angebracht.

Aus der JP 03 114466 A ist ein zahnärztlicher Behandlungsplatz mit einem kombinierten Anzeigegerät und Röntgenfilmbetrachter bekannt. Beide sind rückseitig zueinander angeordnet und um eine gemeinsame Achse schwenkbar. Somit kann je nach Bedarf entweder das Anzeigegerät oder der Röntgenfilmbetrachter zum Benutzer gedreht werden.

Der im Anspruch 1 angegebenen Erfindung liegt die Aufgabe zugrunde, eine platzsparende Lösung für die Unterbringung eines Röntgenfilmbetrachters zu schaffen, der im Normalgebrauch des Arbeitsgerätes nicht im Sichtfeld des Behandlers liegt und der im Anwendungsfall sofort betriebsbereit ist.

Ein Ausführungsbeispiel wird nachfolgend anhand er Zeichnung näher erläutert. Es zeigen:
- Fig. 1: ein zahnärztliches Arbeitsgerät mit einer seitlich angeordneten Bedien- und/oder Anzeigevorrichtung in einer Schrägansicht von vorne,
- Fig. 2: die Anordnung mit geschwenkter Bedien- und/oder Anzeigevorrichtung und
- Fig. 3: einen Teil der Bedien- und/oder Anzeigevorrichtung in einer Exposionsdarstellung.

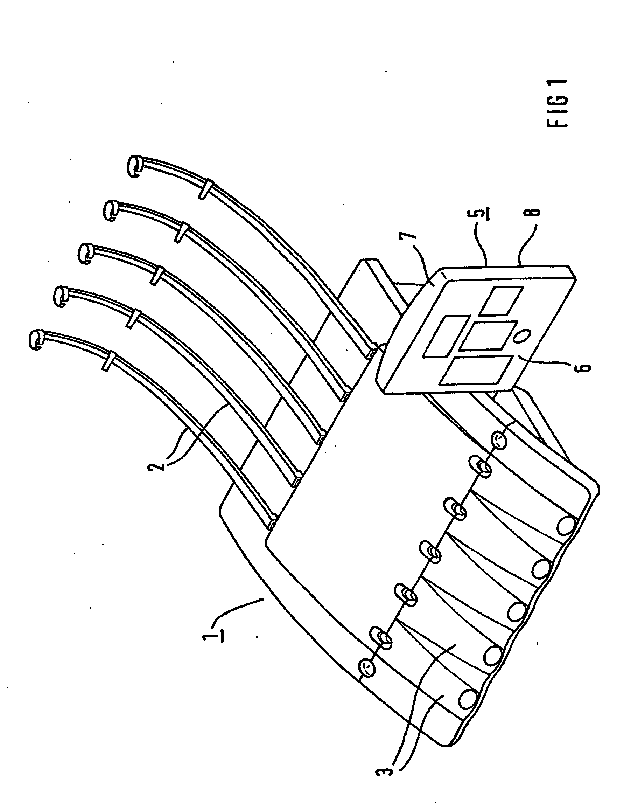

Die Fig. 1 zeigt in einer schaubildlichen Darstellung ein allgemein mit der Position 1 bezeichnetes zahnärztliches Arbeitsgerät, das in bekannter Weise mehrere hier nicht dargestellte schlauchgebundene Handstücke trägt, deren Versorgungsschläuche durch Stützarme 2 nach Art einer Peitsche gehalten werden. Bei Nichtgebrauch der Handstücke befinden sich die Peitschenarme in der hier gezeichneten Nichtgebrauchslage; die zugehörigen Instrumente sind in mit 3 angedeuteten Ablagemulden abgelegt.

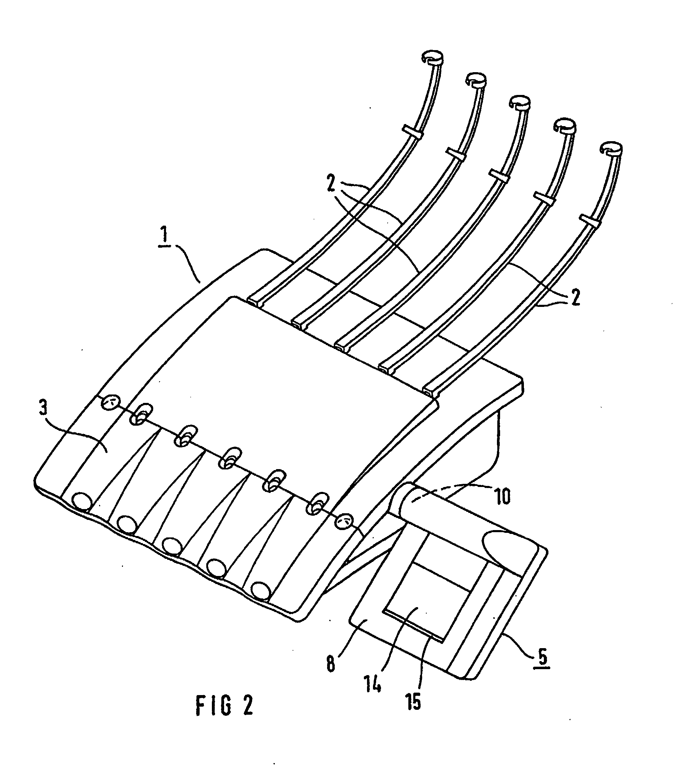

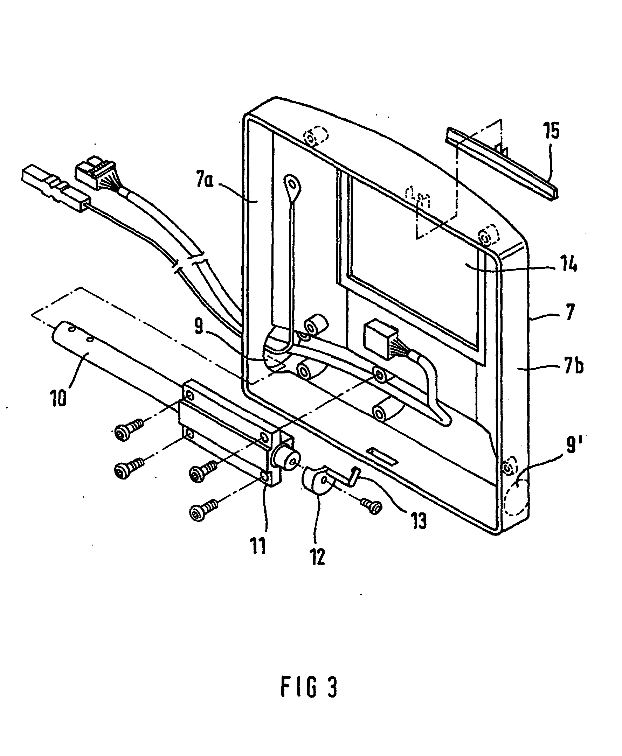

Seitlich des Arbeitsgerätes 1 befindet sich eine Bedienund/oder Anzeigevorrichtung 5, welche frontseitig ein Bedienund/oder Anzeigefeld 6 enthält. Das Bedien- und/oder Anzeigefeld 6 kann eine Folientastatur mit integriertem LCD-Display für Anzeigen von Betriebsparametern der Handstücke oder dergleichen aufweisen. Dieses Bedien- und/oder Anzeigefeld 6 ist frontseitig des Gehäuses 7 in der Vorrichtung eingebaut. An der Rückseite befindet sich ein Röntgenfilmbetrachter 8, der durch Schwenken der Vorrichtung um einen horizontale Achslagerung in eine geeignete Betrachtungsposition bringbar ist. Aus Fig. 3, die den rückwärtigen Teil des Gehäuses 7 im geöffneten Zustand, also ohne Bedien- und/oder Anzeigefeld 6, zeigt, ist ersichtlich, daß auf der linken Schmalseite 7a des Gehäuses 7 eine Öffnung 9 vorgesehen ist, durch die ein Lagerzapfen 10 gesteckt wird, der im Gehäuse des zahnärztlichen Arbeitsgerätes 1 befestigt ist. Mit 11 ist ein Lagerbock bezeichnet, der mit nicht näher bezeichneten Befestigungsmitteln am Gehäuse 7 montiert wird. Im montierten Zustand kann das Gehäuse und damit die gesamte Bedien- und/oder Anzeigevorrichtung um den Lagerzapfen 10 geschwenkt werden. Auf dem Lagerzapfen 10 ist ein Teil 12 mit einem Mitnehmer 13 befestigt, der mit einer im Gehäuse angeordneten, hier nicht dargestellten Lichtschranke so zusammenwirkt, daß ein im Gehäuse befindliches Leuchtmittel zum Ausleuchten der Filmbetrachtungsfläche 14 selbsttätig einschaltet, wenn die Vorrichtung aus der in Fig. 1 gezeigten Position in die in Fig. 2 dargestellte Position geschwenkt wird und die das Leuchtmittel wieder ausschaltet, wenn die Vorrichtung wieder in die Ausgangsposition zurückgeschwenkt wird. Mit der Position 15 ist eine Klemmleiste bezeichnet, die das Fixieren bzw. Haltern eines Röntgenfilmes ermöglicht.

Damit alternativ zu der dargestellten Ausführung auch eine Anordnung der Bedien- und/oder Anzeigevorrichtung auf der gegenüberliegenden linken Seite des Arbeitsgerätes 1 möglich ist, ist das Gehäuse 7 auf der anderen Schmalseite 7b entsprechend so vorbereitet, daß eine Öffnung 9' im Bedarfsfalle für eine Durchführung des Lagerzapfens an dieser Stelle vorgesehen werden kann. Damit läßt sich eine Halterung der Bedien- und/oder Anzeigevorrichtung auch für einen Linkshänder leicht realisieren, vorausgesetzt entsprechende Adaptionsmöglichkeit ist im Arbeitsgerät 1 vorgesehen.

## Patentansprüche

1. Bedien-und/oder Anzeigevorrichtung (5) für ein zahnärztliches Arbeitsgerät (1), enthaltend ein Gehäuse (7) mit einem Bedien-und/oder Anzeigefeld (6) und einen in dessen Betrachtungsposition bringbaren, schwenkbeweglich angeordneten Röntgenfilmbetrachter (8), wobei der Röntgenfilmbetrachter (8) auf der Rückseite des Gehäuses (7) angeordnet ist, **dadurch gekennzeichnet, dass** im Gehäuse (7) Leuchtmittel zur Ausleuchtung der Filmbetrachtungsfläche und Schaltmittel (12, 13) zum selbsttätigen Ein- und Ausschalten der Leuchtmittel bei einem Schwenken der Vorrichtung um einen Lagerzapfen (10) vorgesehen sind.

2. Vorrichtung nach Anspruch 1, **dadurch gekennzeichnet, dass** das Gehäuse (7) an einem horizontalen Lagerzapfen (10) schwenkbar angeordnet ist.

3. Vorrichtung nach Anspruch 2, **dadurch gekennzeichnet, dass** der Lagerzapfen (10) an einer der dem Bedien-und/oder Anzeigefeld (6) angrenzenden Seitenwand (7a) des Gehäuses (7) angeordnet ist.

4. Vorrichtung nach Anspruch 3, **dadurch gekennzeichnet, dass** das Gehäuse (7) und die Lagerung (11) für den Lagerzapfen (10) so ausgebildet sind, daß wahlweise eine Anordnung auf der einen oder anderen Seitenwand (7a, 7b) des Gehäuses (7) ermöglicht ist.

## Claims

1. A control and/or display device (5) for a block of dental implements (1), comprising a housing (7) having a control and/or display area (6) and a rotatably mounted X-ray film viewer (8) capable of being moved to a viewing position, which X-ray film viewer (8) is disposed on the rear side of the housing (7), **characterized in that** in said housing (7) there are provided illuminating means for illuminating the film viewing area and switching means (12, 13) for automatically switching the illuminating means on and off when the device is swivelled on a journal (10).

2. A device as defined in claim 1, **characterized in that** said housing (7) is rotatably mounted on a horizontal journal (10).

3. A device as defined in claim 2, **characterized in that** the journal (10) is disposed on a sidewall (7a) of said housing (7) adjacent to said control and/or display area (6).

4. A device as defined in claim 3, **characterized in that** said housing (7) and the mount (11) for the journal (10) are designed such that it is possible to arrange the journal on one or the other sidewall (7a, 7b) of the housing (7), as desired.

## Revendications

1. Dispositif de commande et/ou d'affichage (5) pour un outil de travail dentaire (1), comprenant un boîtier (7) avec un tableau de commande et/ou d'affichage (6) et un lecteur de radiographies (8) pouvant être amené dans sa position de lecture et disposé pivotant, le lecteur de radiographies (8) étant disposé sur la partie arrière du boîtier (7), **caractérisé en ce que** sont prévus dans le boîtier (7) des moyens lumineux destinés à éclairer la surface de lecture du film et des moyens de commutation (12, 13) pour un allumage et une extinction automatiques des moyens lumineux lors du pivotement du dispositif autour d'un tourillon (10).

2. Dispositif selon la revendication 1, **caractérisé en ce que** le boîtier (7) est disposé pivotant sur un tourillon (10) horizontal.

3. Dispositif selon la revendication 2, **caractérisé en ce que** le tourillon (10) est disposé sur une paroi latérale (7a) du boîtier (7) contiguë au tableau de commande et/ou d'affichage (6).

4. Dispositif selon la revendication 3, **caractérisé en ce que** le boîtier (7) et le logement (11) sont configurés de telle façon pour le tourillon (10) qu'un agencement au choix sur l'une ou l'autre paroi latérale (7a, 7b) du boîtier (7) est ainsi possible.
